# EUROPEAN PATENT APPLICATION

(11) **EP 1 227 032 A2**
(43) Date of publication of application: **31.07.2002**
(21) Application number: 02250638.0
(22) Date of filing: 30.01.2002
(51) Int. Cl.: B62D 31/00, B62D 23/00

(54) **Passenger-carrying motor vehicle with a modular skeleton**

(30) Priority: 30.01.2001 GB 0102359; 27.04.2001 GB 0110370; 07.06.2001 GB 0113873
(71) Applicant: Coleman, Edgar P., Farnham Common, Buckingshare SL2 3RA (GB); Curtis, Colin H., Craqley, West Sussex RH10 1JP (GB)
(72) Inventor: Coleman, Edgar P., Farnham Common, Buckingshare SL2 3RA (GB); Curtis, Colin H., Craqley, West Sussex RH10 1JP (GB)
(74) Representative: W.P. THOMPSON & CO.

(57) **Abstract**

A passenger-carrying motor vehicle has a framework skeleton above a passenger floor level (33), the skeleton comprising three modules connected integrally together in a longitudinally extending array. Front and rear modules are single-section (F, G). The centre module (24) is a multi-section (A to E) assembly with vertical pillars (25) at equal longitudinal intervals and horizontal connecting rails extending longitudinally (26) and transversely. The passenger gangway (33) is at the same level from the front to the rear of the vehicle.

## Description

This invention relates to motor vehicles, and particularly to buses and coaches for the carriage of passengers.

Various types of public service passenger road vehicles are known, for example from GB704363, GB712326, GB737726 and GB789447.

The present invention is concerned with vehicles of modular/integral construction.

In accordance with the present invention there is provided a passenger-carrying motor vehicle having a framework skeleton above a passenger floor, the skeleton comprising a plurality of modules connected integrally together in a longitudinally extending array, said plurality of modules comprising a front module, a rear module, and a multi-section centre module with vertical pillars at equal longitudinal intervals and horizontal connecting rails extending longitudinally and transversely.

Preferably, the passenger floor provides a gangway which is at the same level from the front to the rear of the vehicle.

Weight distribution can be achieved by having an engine, fluid coupling and gearbox mounted below the framework skeleton to one side of the longitudinal centreline of the vehicle, and a battery or batteries and fuel tank or tanks mounted at least partly below the framework skeleton on the other side of the longitudinal centreline of the vehicle.

Preferably, the engine, fluid coupling, gearbox, battery or batteries and fuel tank or tanks are all mounted at least partly beneath the centre section of the skeleton.

In a preferred embodiment, the centre module has five sections, with front suspension means beneath the foremost of the said sections, with a rear axle beneath the rearmost of the said sections, and with the engine, fluid coupling, gearbox, battery or batteries and fuel tank or tanks beneath the three intermediate sections.

In the case of a double-deck vehicle, the floor-to-ceiling height is preferably substantially the same for each deck. This can be achieved easily with the skeletal structure of the present invention.

Preferably, the framework skeleton includes a plurality of roof panels equal in number to the sections therebelow, with at least the front and rear roof panels being removable.

In order to facilitate access to the vehicle, it is desirable that at at least one entry/exit location a section of floor can either be varied in terms of its angle of slope or extended from the vehicle and then made adjustable.

In order that the invention may be more fully understood, a number of embodiments of vehicle in accordance with the invention will now be described by way of example and with reference to the accompanying drawings. In the drawings:
Fig. 1(a) is a schematic representation of a double-decker bus structure, viewed from the off-side;
Fig. 1(b) is a schematic representation of the structure of Fig. 1, viewed from the rear of the vehicle;
Fig. 1(c) is a schematic representation of the structure of the vehicle, viewed from the front;
Fig. 1(d) is a schematic representation of the structure of the vehicle, viewed from the nearside;
Fig. 1(e) is a schematic plan view of the roof structure of the vehicle;
Fig. 1(f) is a schematic representation, in plan, of the upper saloon floor of the vehicle;
Fig. 1(g) is a schematic representation, in plan, of the lower saloon floor of the vehicle together with partly underfloor components;
Figs. 2(a) to 2(g) show views similar to those of Figs. 1(a) to 1(g), but of a single-decker bus structure;
Fig. 3(a) is a representation of the trailing frame of the bus structure of Figs. 1 and 2;
Fig. 3(b) is a representation of the underframe of the bus structure of Figs. 1 and 2;
Fig. 3(c) is a representation of the lower saloon floor frame of the bus structure of Figs. 1 and 2;
Fig. 3(d) is a representation of the partly underfloor components of the bus structure of Figs. 1 and 2;
Fig. 3(e) shows the partly underfloor components of Fig. 3(d) without the rear axle and wheels;
Fig. 3(f) shows the rear axle and wheels;
Fig. 3(g) shows the combination of the trailing frame, rear axle and rear wheels;
Fig. 3(h) shows the combination of the trailing frame and underframe;
Fig. 3(i) shows the combination of the underframe and lower saloon floor frame;
Fig. 3(j) shows the combination of the trailing frame, underframe and lower saloon floor frame;
Fig. 3(k) shows the combination of the underframe and partly underfloor components, without the rear axle and rear wheels;
Fig. 3(l) shows the combination of the underframe, lower saloon floor frame and partly underfloor components, without the rear axle and rear wheels;
Fig. 3(m) shows the combination of the trailing frame, underframe and partly underfloor components;
Fig. 3(n) shows the combination of the trailing frame, underframe, lower saloon floor frame and partly underfloor components;
Fig. 4 is a schematic perspective view of a mechanism by which a change in the angle of slope of the floor at entry/exit locations of the vehicle can be achieved; and,
Fig. 5 is a side view, on an enlarged scale, of the motor and drive shaft of the mechanism shown in Fig. 4.

In the drawings, the following reference numerals identify the following components in the several views:
- 10 -: front independent suspension with wishbone assembly
- 11 -: front wheels
- 12 -: rear axle
- 13 -: rear wheels
- 14 -: engine
- 16 -: fluid coupling
- 18 -: gearbox
- 20 -: battery or batteries
- 22 -: fuel tank or tanks

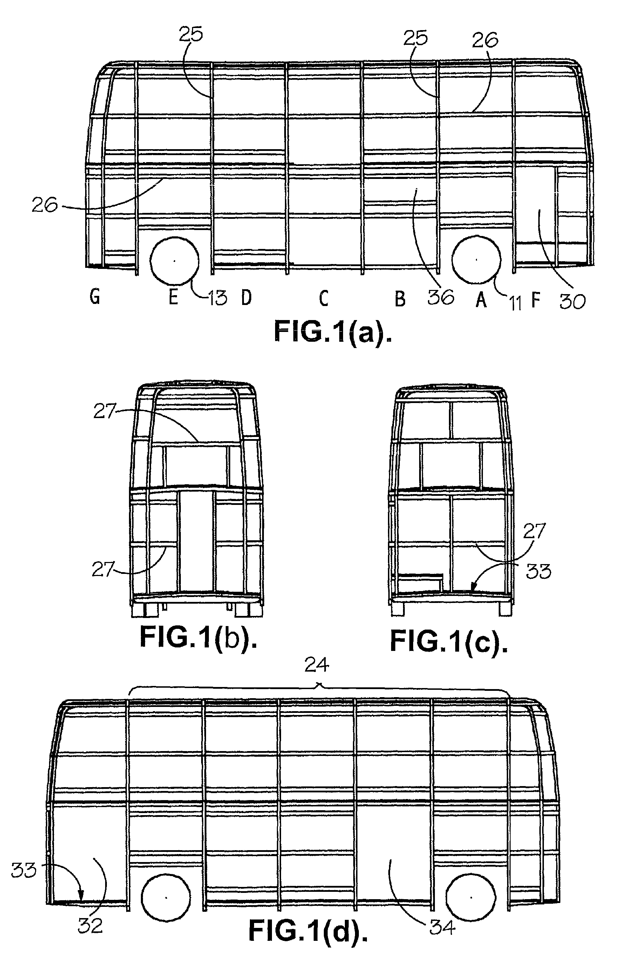

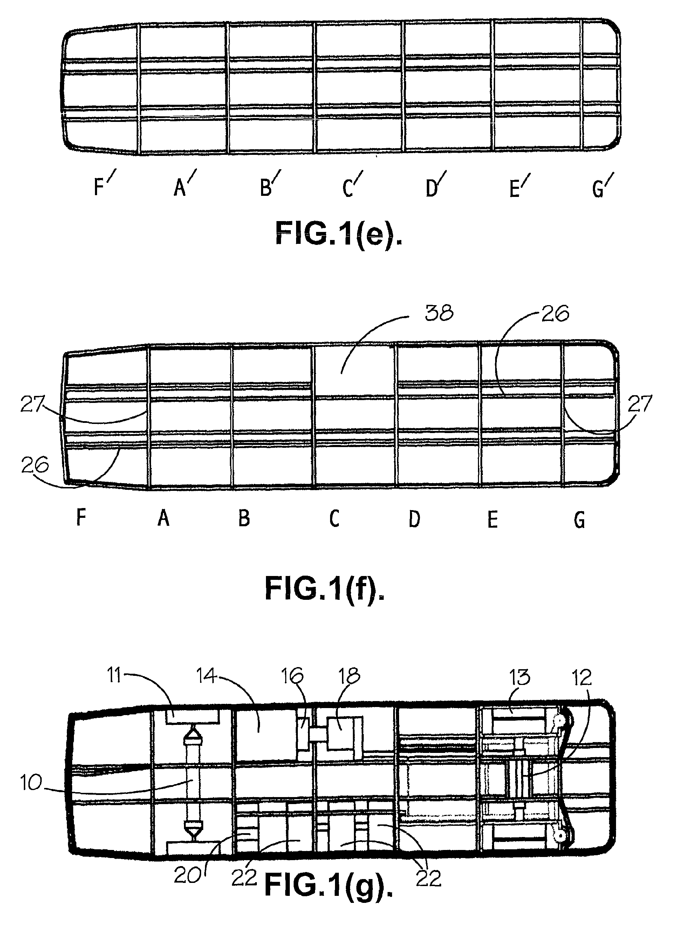

Referring first to Figs. 1(a) to 1(g), these show the framework skeleton of a double-decker bus structure made from pillars, rails, struts, spars and stanchions made of any suitable metal. The skeleton consists of seven sections A to G connected together in a longitudinally extending array above the lower passenger floor level of the vehicle. The seven sections are formed as three modules, a front module a centre module and a rear module. A multi-section centre module 24 is composed of five sections A, B, C, D, E of equal length. At the forward end of the centre module is a front module F, and at the rearward end of the centre module there is a rear module G. The front module F and rear module G can be varied to suit specific requirements, for example the fitting of additional doors or making an open platform at the rear of the vehicle. The front and rear modules F and G act as "crumple" zones. The modules which make up the bus structure are connected one to another to form an integral whole. The integral arrangement is achieved by the use of equispaced vertical pillars 25 in the centre module 24, connected to horizontal longitudinally extending rails 26 which run the length of the vehicle and horizontal transverse rails 27. The skeleton structure thus comprises a large plurality of "boxes" which can be fitted out with external panels and internal stress panels for strength purposes, as required. In other words, the modules are made up of components or sections, such as pillars at each side, which are built individually, and which are then joined together by transverse and longitudinal members. The external panels and internal members are fitted, and then roof panels. The provision of a framework skeleton which is essentially composed of cuboid shapes facilitates the construction and fitting out of the vehicle.

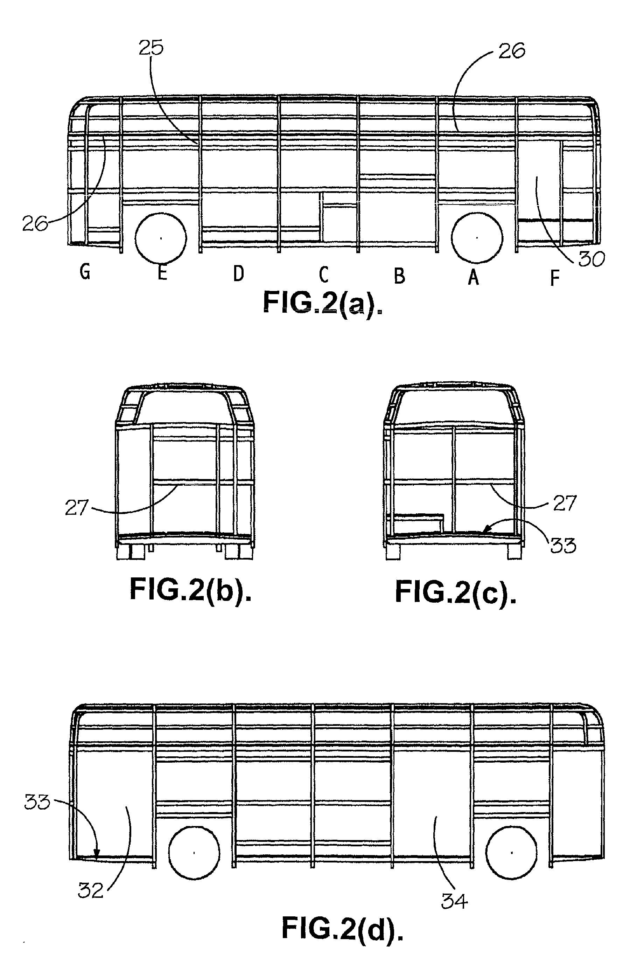

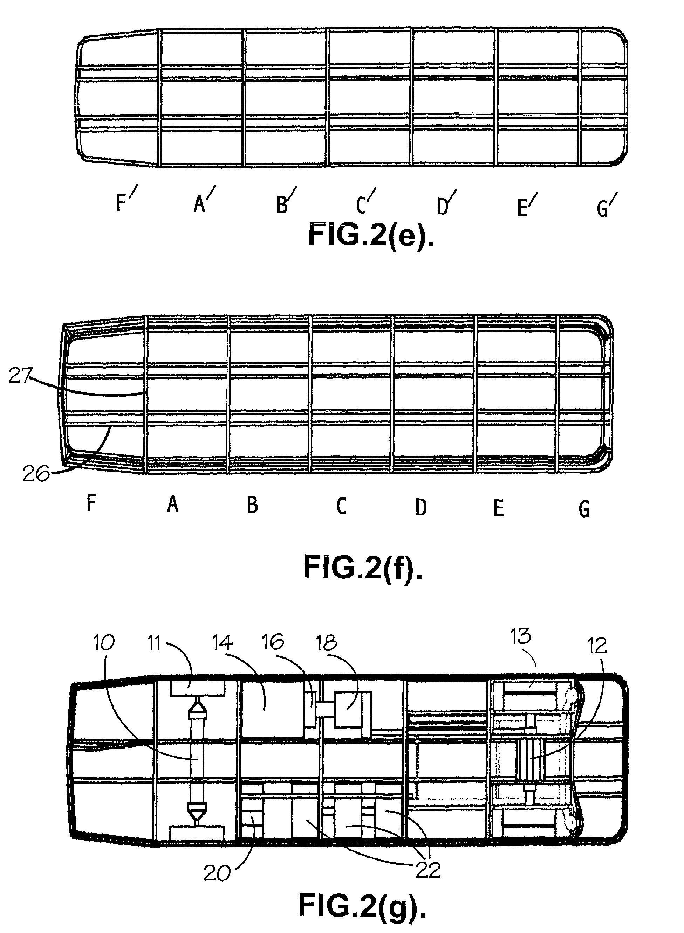

In the double-deck vehicle of Figs. 1 (a) to 1(g), the external driver's door location is indicated at 30, with passenger doors located at 32 and 34. An internal driver's door can also be fitted. In the single-deck vehicle shown in Figs. 2(a) to 2(g), the same reference numerals are used. A luggage zone is indicated at 36. In the double-deck bus, vehicle stairs are positioned at 38, as shown most clearly in Fig. 1(f).

Variations can be incorporated into the individual sections, for example substituting doors with windows, removing stairs for single-deck construction, etc. All this can be achieved without any excessive structural alteration.

With the modular construction, the window pillars and transverse seats can be "lined up" in order that there is no obstruction of the view for the passengers.

A particular feature of the modular vehicles of the present invention is that the passenger floor 33 provides a gangway which is the same height from front to rear of the vehicle, including any emergency exit. In other words, there are no steps in the floor surface 33 on which the passengers will walk from front to rear of the vehicle. This is of great assistance to aged and disabled people.

The height of the driver's seat is raised, which is important for one-person eye-to-eye level operation of the vehicle.

In order to keep glass to a minimum and to save weight, all the windows in the centre module 24 are of the same size. Also, all the panels are the same size in the centre module 24.

It is a further feature of the present invention that weight is distributed evenly throughout the centre module. The engine 14, fluid coupling 16 and gearbox 18 are positioned on the off-side of the vehicle within sections B and C. The battery or batteries 20 and fuel tank or tanks 22 are positioned on the nearside of the vehicle within sections B and C. This gives more even weight distribution front to rear, more even wear on brakes and tyres and good stability overall. It will also be noted from the drawings that the front and rear suspensions, including the front wheels 11 and rear wheels 13, are positioned below the foremost and rearmost sections A and E of the centre module 24. This gives maximum passenger comfort with equal spacing of transverse seats.

The lower half of the centre module 24, comprising sections A to E, is the same for both double-deck and single-deck vehicles. Again, this represents a cost saving in terms of manufacture and stocking of parts.

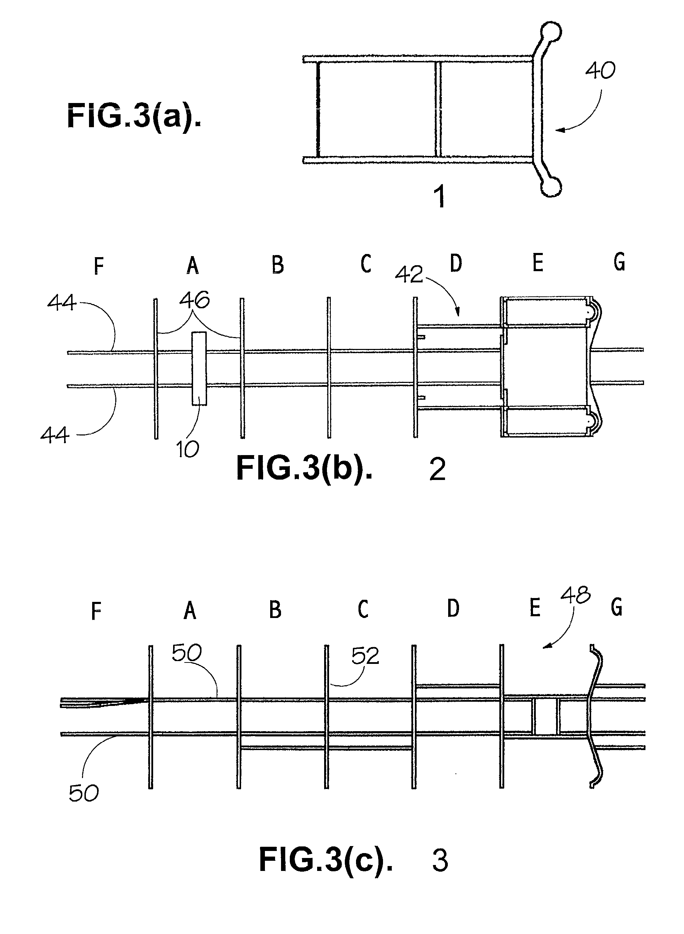

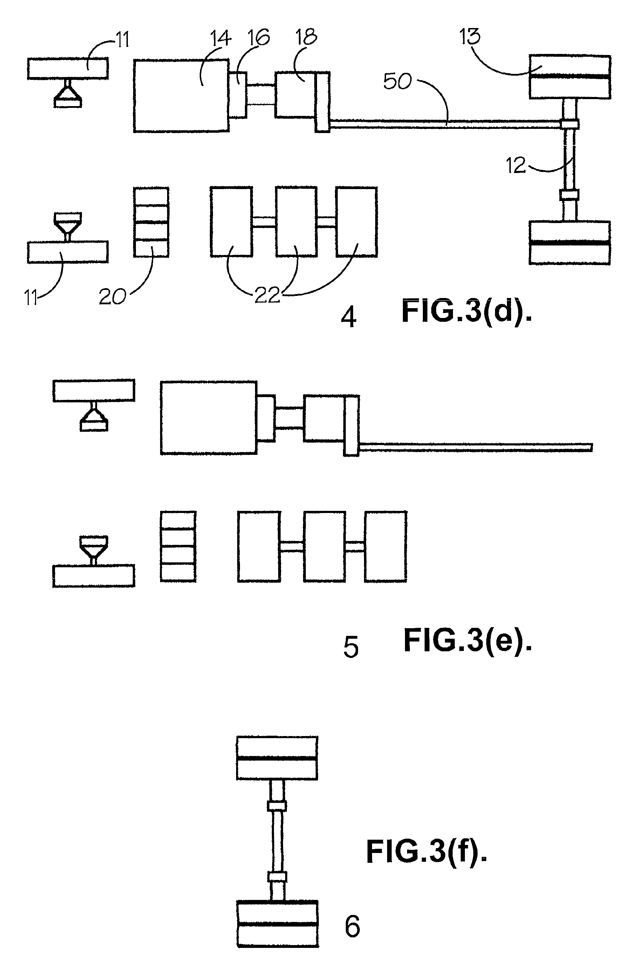

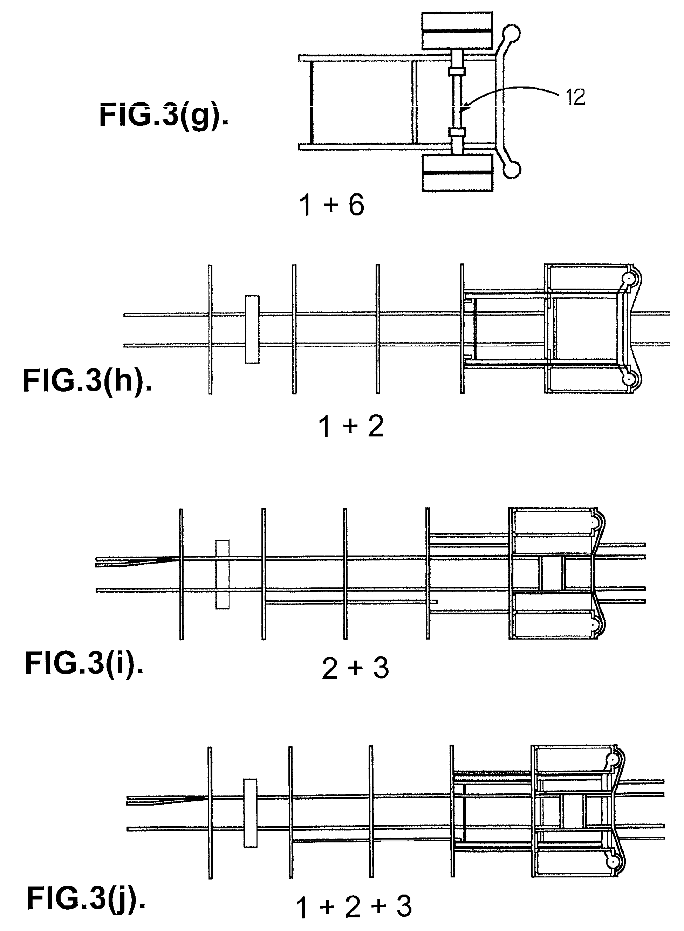

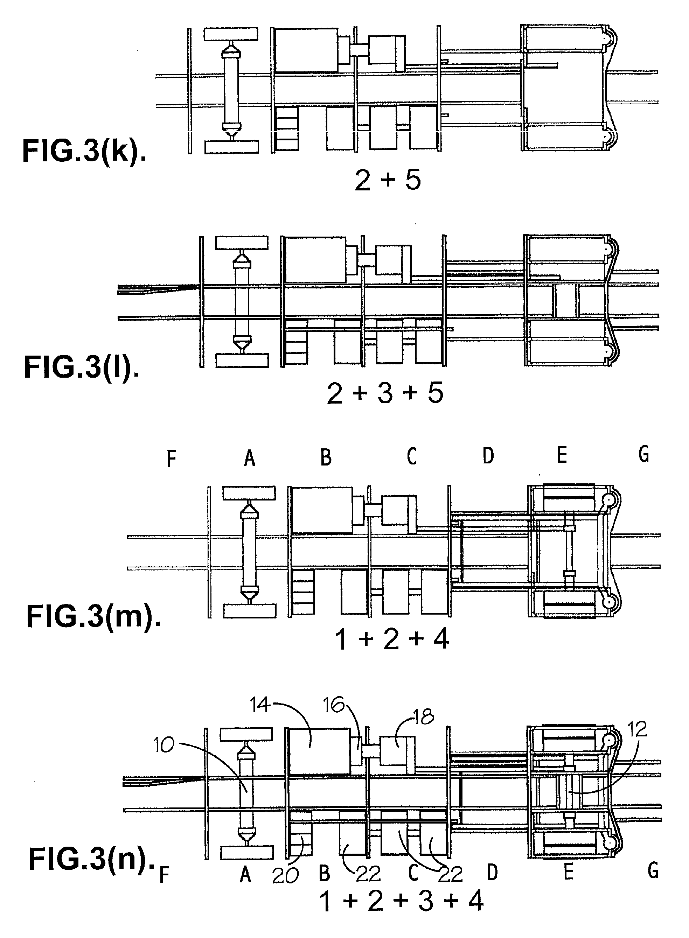

Reference is now made to Figs. 3(a) to 3(n) which show the parts which are beneath or partly beneath the passenger floor 33. Associated with each of Figs. 3(a) to 3(n) is a number or combination of numbers which indicate how the various parts of the structure appear in various combinations. For example, Fig. 3(n) which is designated "1+2+3+4" shows the complete structure below the passenger floor 33. In some of the Figures the reference letters A to G have been included to enable these drawings to be related to what is shown in Figs. 1 and 2.

Fig. 3(a) shows a trailing frame 40 which is positioned towards the rear of the vehicle in alignment with the rear axle 12.

Fig. 3(b) shows an underframe 42 which is composed of horizontal longitudinally extending rails 44 and horizontal transversely extending rails 46. The underframe extends the full length of the vehicle. Fig. 3(h) shows the combination of the trailing frame 40 and underframe 42.

Fig. 3(c) shows the lower saloon floor frame, indicated at 48. This again comprises horizontal longitudinally extending rails 50 and horizontal transversely extending rails 52 and extends the full length of the vehicle. Fig. 3(i) shows the combination of the underframe 42 and lower saloon floor frame 48. Fig. 3(j) shows the combination of the trailing frame 40, the underframe 42 and the lower saloon floor frame 48.

Fig. 3(d) shows the components which are under or partly under the floor, namely the engine 14, fluid coupling 16, gearbox 18, battery or batteries 20 and fuel tank or tanks 22, together with the rear axle 12, rear wheels 13 and front wheels 11. The rear axle is carried on a pivoted trailing frame, i.e. the trailing frame 40. A drive shaft 50 connects the gearbox 18 to the rear axle 12. Fig. 3(e) shows these components minus the rear axle and rear wheels. These are shown separately in Fig. 3(f).

Fig. 3(m) shows the combination of the trailing frame 40, the underframe 42 and the partly underfloor components. Fig. 3(l) is similar, but without the inclusion of the rear axle and rear wheels. Fig. 3(k) shows the combination of the underframe 42 with the partly underfloor components of Fig. 3(e), without the rear axle and rear wheels. Fig. 3(n) shows the complete structure as assembled.

Preferably, the skeletal structure above the passenger floor level 33 and the lower saloon floor frame 48 and underframe 42 are made of aluminium, with only the trailing frame 40 being made of steel. The modules can be built separately, and then combined together, and with the trailing frame and underframe, to give sufficient strength overall. With aluminium construction the weight of the vehicle is kept to a minimum. This gives improved fuel consumption. Replacement of individual units is simple and almost all the mechanical maintenance can be done from outside the vehicle.

The roof of the vehicle consists of seven sections, as shown in Figs. 1(e) and 2(e), equal in number to the sections below. The centre five sections A' to E' are panels of equal length. The front and rear sections F' and G' of the roof are domes which are easily removable, enabling replacement in the event of damage by trees or falling objects. The roof sections can be made of glass-fibre material to give additional weight savings.

It will also be noted from the drawings that the rear overhang of the vehicles is kept to a minimum to avoid obstacles when turning. It will also be noted that the floor to ceiling height is the same for both lower and upper saloons in the double-deck vehicle, as shown most clearly in Figs. 1(a) to 1(d).

As mentioned above, it is a particular feature of the vehicles of the present invention that the passenger gangway can be at the same level from front to rear of the vehicle, including any emergency exit, i.e. without any steps. It is also desirable that there should be provision for wheelchair access and exit.

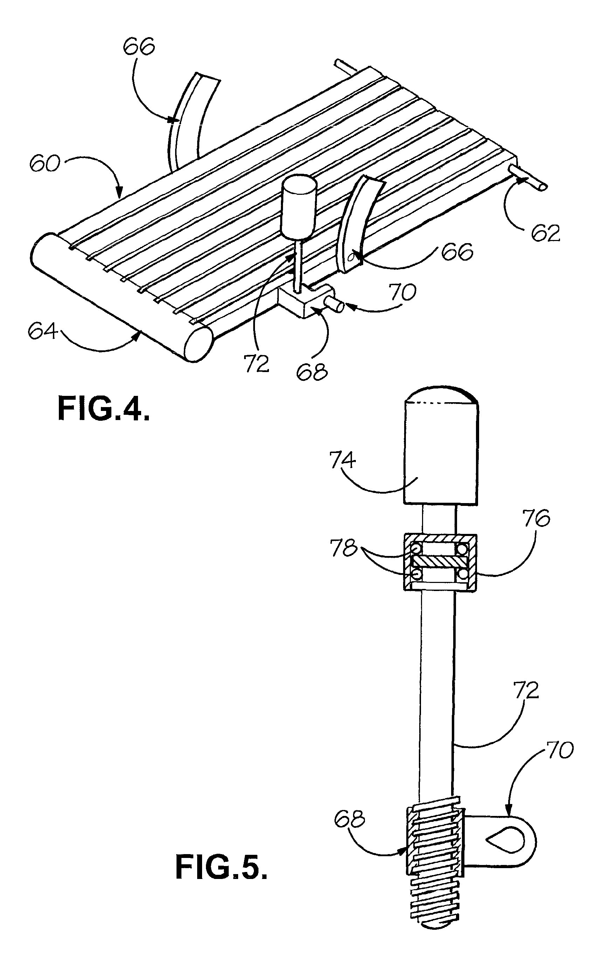

Improved access and exit for wheelchairs can be achieved if a sloping floor is provided at the exit and entry points. Roadside kerbs are of different heights, and the problem for wheelchair users is to move from the kerb into the vehicle or vice versa. With a totally fixed vehicle floor this can be difficult without some form of intermediate ramp or lifting mechanism. By providing a slightly sloping floor at one or more entry/exit locations in the vehicle one can match the floor to the height of the adjacent kerb. A section of the floor at this point or these points is arranged to be capable of being varied in terms of its angle of slope, for example over a range of 3° to 6°. By providing this variable angle of slope, the entry to and exit from the vehicle for wheelchairs is facilitated. Figs. 4 and 5 show one embodiment of a mechanism by which the change in the angle of slope of a floor can be effected. In Figs. 4 and 5, there is shown a ramp 60 which is arranged to be lowered to enable passengers to access or exit a vehicle from a kerb or roadside. The ramp 60 is provided at one end with a pivot shaft 62 which is mounted on the vehicle at an entrance/exit doorway. The outer end of the ramp 60 is provided with a pad 64 of rubber or other like material. The amount of pivotable movement through which the ramp is arranged to travel is relatively small, for example of the order of 3° to 6°. However, this range is not to be regarded as limiting. A pair of arcuate platform guides 66 are fixed to the sides of the ramp 60 to assist in the pivotable movement.

At one side of the ramp 60 there is fitted a platform lower bracket 68 which is pivotably mounted on the ramp by means of a pivot pin 70. The bracket 68 is provided with a screw-threaded hole therethrough. This receives the lower, screw-threaded end of a drive shaft 72 which is driven by an electric motor 74. On the drive shaft 72 is mounted a cap 76 which incorporates O-ring seals 78.

In operation, actuation of the electric motor 74 will cause the drive shaft 72 to rotate and this will cause the ramp 70 to be raised or lowered. The actuation of the electric motor 74 can be controlled either by the driver or by the pressing of a button for example within the vehicle. Provision can be made for manual operation of the mechanism if the motor should fail.

In an alternative embodiment, a section of flooring can be made extensible from the vehicle and also adjustable in terms of angle of slope, so that even if the vehicle should stop at a distance from the kerb it is still possible to traverse the gap safely and conveniently. The angle of slope of 3° to 6° referred to above is not to be regarded as a limiting figure, but is presently regarded as a preferred range of movement.

## Claims

1. A passenger-carrying motor vehicle having a framework skeleton above a passenger floor (33), the skeleton comprising a plurality of modules connected integrally together in a longitudinally extending array, said plurality of modules comprising a front module (F), a rear module (G), and a multi-section centre module (24) with vertical pillars (25) at equal longitudinal intervals and horizontal connecting rails extending longitudinally and transversely.

2. A vehicle as claimed in claim 1, **characterised in that** the passenger floor (33)provides a gangway which is at the same level from the front to the rear of the vehicle.

3. A vehicle as claimed in claim 1 or 2, **characterised in that** an engine (14), fluid coupling (16) and gearbox (18) are mounted at least partly below the framework skeleton to one side of the longitudinal centreline of the vehicle, and a battery or batteries (20) and fuel tank or tanks (22) are mounted at least partly below the framework skeleton on the other side of the longitudinal centreline of the vehicle.

4. A vehicle as claimed in claim 3, **characterised in that** the engine (14), fluid coupling (16), gearbox (18), battery or batteries (20) and fuel tank or tanks (22) are all mounted at least partly beneath the centre module of the skeleton.

5. A vehicle as claimed in claim 4, **characterised in that** the centre module has five sections (A to E), with front suspension means (10) beneath the foremost (A) of the said sections, with a rear axle (12) beneath the rearmost (E) of the said sections, and with the engine (14), fluid coupling (16), gearbox (18), battery or batteries (20) and fuel tank or tanks (22) beneath the three intermediate sections (B,C,D).

6. A vehicle as claimed in any preceding claim, **characterised in that** the vehicle has independent front suspension means (10) and a rear axle (12), each of which is positioned beneath the multi-section centre module (24) of the skeleton.

7. A vehicle as claimed in any preceding claim, which is a double-deck vehicle with the floor-to-ceiling height substantially the same for each deck.

8. A vehicle as claimed in any preceding claim, **characterised in that** the front module (A) and rear module (E) are each single-section.

9. A vehicle as claimed in any preceding claim, **characterised in that** the framework skeleton includes a plurality of roof panels (A' to G') equal in number to the sections therebelow, with at least the front and rear roof panels (A', G') being removable.

10. A vehicle as claimed in any preceding claim, **characterised in that** a section of floor (33) at at least one entry/exit location is capable of being varied in terms of its angle of slope.

11. A vehicle as claimed in any of claims 1 to 9, **characterised in that** a section of floor (33) is extensible and adjustable in terms of its angle of slope to facilitate entry/exit at at least one location.

12. A vehicle as claimed in claim 10 or 11, **characterised in that** the angle of slope is a maximum of 6° to the horizontal.
